# FASCICULE DE BREVET EUROPEEN

(11) **EP 3 430 484 B1**
(45) Date de publication et mention de la délivrance du brevet: **27.03.2024**
(21) Numéro de dépôt: 17707861.5
(22) Date de dépôt: 28.02.2017
(51) Int. Cl.: G05B 19/4062, G05B 23/02

(54) **DISPOSITIF D'ACTIONNEMENT ET CARTE DE COMMANDE ET DE SURVEILLANCE ASSOCIÉE**
BETÄTIGUNGSVORRICHTUNG UND ENTSPRECHENDES STEUER- UND ÜBERWACHUNGSPULT
ACTUATION DEVICE AND ASSOCIATED CONTROL AND MONITORING BOARD

(30) Priorité: 15.03.2016 FR 1652202
(43) Date de publication de la demande: 23.01.2019
(73) Titulaire: Safran Electronics & Defense, 92100 Boulogne-Billancourt (FR)
(72) Inventeur: VANDENBAVIERE, Yann, 92100 Boulogne Billancourt (FR)
(74) Mandataire: Cabinet Boettcher
(86) Numéro de dépôt international: PCT/EP2017/054630
(87) Numéro de publication internationale: WO 2017/157653

(56) Documents cités:
- EP-A2- 2 241 948
- EP-A2- 2 293 429
- US-A1- 2007 033 195
- US-A1- 2013 338 846

## Description

### DOMAINE DE L'INVENTION

La présente invention concerne le pilotage d'actionneurs et plus particulièrement le pilotage d'actionneurs critiques.

### ARRIERE PLAN DE L'INVENTION

Les commandes de vol d'aéronefs, et notamment d'hélicoptères, intègrent de plus en plus d'actionneurs électriques, comme par exemple un vérin électrohydraulique de commande de pas des pales d'un rotor. Un dispositif de pilotage d'un tel actionneur électrohydraulique comprend classiquement un calculateur intégrant une carte électronique de commande et une carte électronique de surveillance. La carte électronique de commande transforme les instructions du pilote en une consigne électrique envoyée via un circuit de commande filaire à l'actionneur. La consigne électrique résulte en une sortie ou une rétraction déterminée de la tige de l'actionneur. La carte électronique de surveillance est reliée par un circuit de surveillance filaire à un capteur de déplacement de la tige du vérin. Sur la base des informations issues de la carte de commande et de la carte de surveillance, le calculateur établit une boucle d'asservissement afin d'assurer le bon fonctionnement de la commande. Les normes de sûreté aéronautique requièrent que les ressources mises en œuvre pour le traitement des informations issues de la carte de commande et de la carte de surveillance soient distinctes. Ces exigences aboutissent à l'utilisation d'un calculateur comprenant deux voies. Une première voie traite les informations en provenance et à destination de la carte de commande et la deuxième voie traite les informations en provenance et à destination de la carte de surveillance. Ainsi la criticité d'une défaillance d'une des deux cartes ou d'une des deux voies est réduite. En effet, la défaillance d'un des éléments de commande (circuit ou carte) sera détectée par la carte de surveillance et la défaillance d'un des éléments du circuit de surveillance n'entraîne pas la perte du contrôle de l'actionneur.

Dans un but de compacité des équipements, une carte de commande prend fréquemment en charge la commande de plusieurs actionneurs. Une telle carte comprend généralement plusieurs processeurs reliés chacun à un circuit de commande dédié à un actionneur. Les cartes de surveillance comprennent également plusieurs processeurs reliés chacun à un circuit de surveillance dédié à un actionneur.

US 2007/033195 A1 divulgue un appareil qui concerne un dispositif de conversion sécurisé pour un aéronef capable de convertir des commandes numériques discrètes transmises par un ordinateur en un signal de puissance analogique pour piloter un actionneur analogique de l'aéronef. 1

EP 2 293 429 A2 concerne un dispositif sécurisé de surveillance et de commande pour actionneur de pilotage d'un aéronef. Elle s'applique notamment au domaine de l'aéronautique, et plus particulièrement aux actionneurs de pilotage d'avions ou d'hélicoptères.

Les dispositifs de pilotage comprenant une telle architecture de surveillance et de commande se révèlent fiables mais représentent des investissements importants en développement, fabrication et maintenance de chacun de ses éléments. Les délais cumulés de mise au point et de fabrication de chacune des cartes requièrent de mettre en oeuvre des solutions coûteuses pour satisfaire aux exigences de réactivité des constructeurs aéronautiques.

### OBJET DE L'INVENTION

Un but de l'invention est de réduire les coûts de développement, de fabrication et/ou de maintenance d'un dispositif d'actionnement.

### RESUME DE L'INVENTION

A cet effet, on prévoit un dispositif d'actionnement comprenant au moins un premier actionneur et un deuxième actionneur qui sont pourvus de moyens de leur liaison respective avec un premier et un deuxième circuit de commande ainsi qu'avec un premier et un deuxième circuit de surveillance ; et un calculateur à deux voies de calcul indépendantes comprenant :
- une première carte de commande et de surveillance et une deuxième carte de commande et de surveillance, chacune respectivement pourvue d'un premier module de commande et d'un deuxième module de commande ainsi que d'un premier module de surveillance et d'un deuxième module de surveillance, les cartes étant identiques. Selon l'invention, les premier et deuxième modules de commande sont respectivement reliés aux premier et deuxième circuits de commande. Le premier module de surveillance est relié au deuxième circuit de surveillance et le deuxième module de surveillance est relié au premier circuit de surveillance.

Ainsi, une unique carte assurant des fonctions distinctes de commande et de surveillance est utilisée deux fois en lieu et place d'une carte de commande mise en parallèle avec une carte de surveillance, sans compromettre la sûreté de fonctionnement du dispositif. Une seule carte doit donc être développée, ce qui permet de diviser par deux les ressources nécessaires au développement par rapport à une architecture de commande et de surveillance comprenant deux cartes différentes. Une unique unité de fabrication est nécessaire pour la réalisation des composants du calculateur, résultant en des économies d'échelle et une mobilisation de moyens réduite. Enfin, la maintenance est simplifiée car il n'est plus nécessaire de stocker une carte de commande et une carte de surveillance, mais une carte unique. La formation des agents à la maintenance du système est plus rapide et plus efficace car elle porte sur une unique carte. L'outillage spécifique est également réduit.

Par « sensiblement identiques », on entend une base matérielle et logicielle commune. Par exemple, deux cartes qui ne se distingueraient que par l'origine des composants qu'elles reçoivent sont sensiblement identiques au sens de la présente demande. La présence ou l'absence, sur une des cartes d'un couple de cartes, d'éléments non indispensables au fonctionnement comme par exemple de la connectique, une ventilation, des témoins lumineux ou sonores des modules de communication filaire ou sans fil n'empêche pas ces cartes d'être sensiblement identiques au sens de l'invention.

L'invention porte également sur une carte de commande et de surveillance dans laquelle le module de commande comprend un premier microcontrôleur et dans lequel le module de surveillance comprend un deuxième microcontrôleur.

Avantageusement, la carte de commande et de surveillance comprend un unique circuit logique programmable reconfiguré pour réaliser un premier réseau logique et un deuxième réseau logique qui sont ségrégués et qui correspondent respectivement à un module de commande et à un module de surveillance.

Une telle carte permet de mettre en œuvre un unique FPGA pour réaliser les deux fonctions de commande et de surveillance de la carte. Outre les avantages offerts par l'utilisation d'un FPGA en termes de rapidité de déploiement, la création au sein d'un unique FPGA de deux circuits ségrégués améliore la fiabilité de la carte. Par ségrégué, on entend une séparation physique stricte sans interaction.

D'autres caractéristiques et avantages ressortiront à la lecture de la description qui suit de modes de réalisation particuliers non limitatifs de l'invention.

### BREVE DESCRIPTION DES DESSINS

Il sera fait référence aux dessins annexés, parmi lesquels :*
- la figure 1 est une représentation schématique du dispositif d'actionnement selon l'invention ;
- la figure 2 est une représentation schématique d'un premier mode de réalisation d'un calculateur selon l'invention ;
- la figure 3 est une représentation schématique d'un premier mode de réalisation d'une carte électronique selon l'invention ;
- la figure 4 est une représentation schématique d'un deuxième mode de réalisation d'une carte électronique selon l'invention ;
- la figure 5 est une représentation schématique d'un deuxième mode de réalisation d'un calculateur selon l'invention.

### DESCRIPTION DETAILLEE DE L'INVENTION

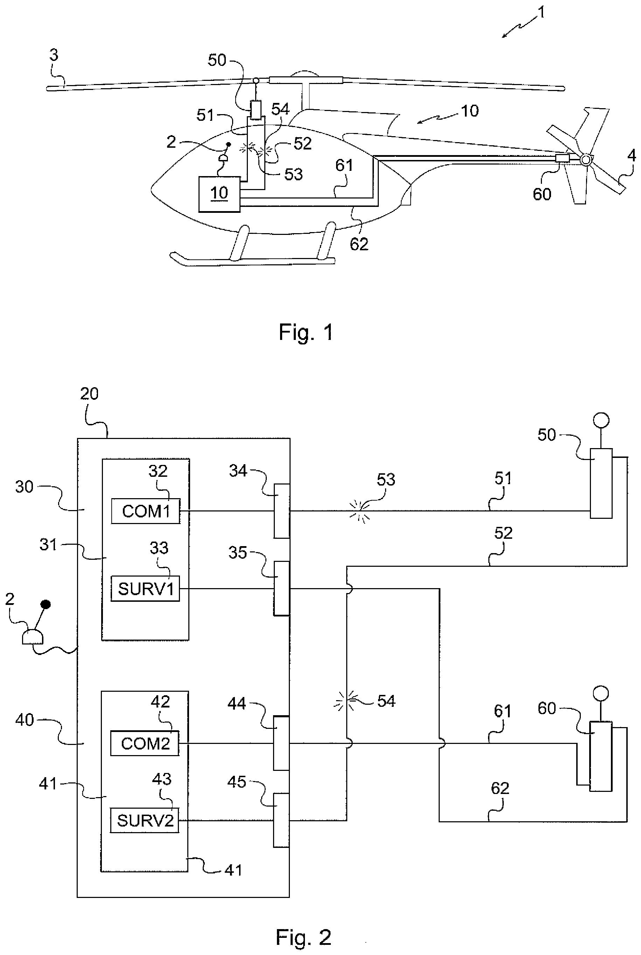

En référence aux figures 1 et 2, un hélicoptère - généralement désigné 1 - comporte un dispositif d'actionnement 10 comprenant un calculateur 20 à deux voies de calcul 30 et 40 indépendantes relié à une commande de vol 2. Le calculateur 20 est relié à un premier vérin 50 électrique de réglage du pas de rotor principal 3 par un premier circuit de commande 51 et un premier circuit de surveillance 52. Le calculateur 20 est également relié à un deuxième vérin 60 électrique de réglage du pas de rotor anti-couple 4 par un deuxième circuit de commande 61 et un deuxième circuit de surveillance 62.

La première voie de calcul 30 comprend une première carte 31 de commande et de surveillance pourvue d'un premier module de commande 32 et d'un premier module de surveillance 33.

La deuxième voie de calcul 40 comprend quant à elle une deuxième carte 41 de commande et de surveillance pourvue d'un deuxième module de commande 42 et d'un deuxième module de surveillance 43. Les cartes 31 et 41 sont ici identiques.

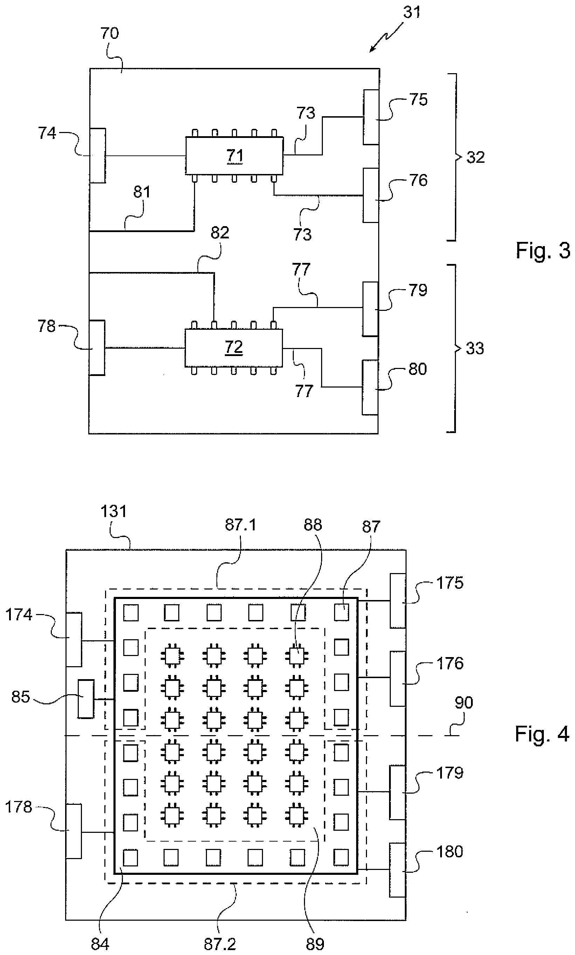

En référence à la figure 3, la carte 31 comprend un circuit imprimé 70 recevant un premier microcontrôleur 71 et un deuxième microcontrôleur 72. Le premier microcontrôleur 71 est relié par des pistes imprimées 73 à deux connecteurs CAN 74 et 75 ainsi qu'à un connecteur RJ45 76. Le deuxième microcontrôleur 72 est relié par des pistes imprimées 77 à deux connecteurs CAN 78 et 79 ainsi qu'à un connecteur RJ45 80. Des pistes imprimées 81 et 82 alimentent respectivement le premier et le deuxième microcontrôleur 71 et 72 en courant. L'ensemble constitué par le premier microcontrôleur 71, ses connecteurs 74-75 et 76 ainsi que son alimentation électrique 81 forme un premier module de commande 32. L'ensemble constitué par le deuxième microcontrôleur 72, ses connecteurs 78-79 et 80 ainsi que son alimentation électrique 82 forme un premier module de surveillance 33. Les modules 32 et 33 sont indépendants et ne partagent pas de connexion entre eux.

Le premier module de commande 32 est relié par un connecteur à trente-cinq broches 34 au premier circuit de commande 51. Le deuxième module de commande 42 est relié par un connecteur à trente-cinq broches 44 au deuxième circuit de commande 61.

Le premier module de surveillance 33 est relié par un connecteur à trente-cinq broches 35 au deuxième circuit de surveillance 62. Le deuxième module de surveillance 43 est relié par un connecteur à trente-cinq broches 45 au premier circuit de surveillance 52.

Lorsque le pilote de l'hélicoptère 1 agit sur la commande de vol 2 afin de modifier le pas du rotor principal 3, le premier module de commande 32 de la première carte 31 émet une consigne électrique 53 sur le premier circuit de commande 51. La tige du premier vérin 50 se met alors en mouvement. Le déplacement de la tige du premier vérin 50 est mesuré et transmis sous la forme d'un signal électrique 54 transitant par le premier circuit de surveillance 52 jusqu'au deuxième module de surveillance 43 de la deuxième carte 41. Le calculateur 20 réalise alors une boucle d'asservissement et cesse l'envoi de la consigne électrique 53 lorsque la tige du premier vérin 50 a atteint la position correspondant à l'instruction portée sur la commande de vol 2 par le pilote. Ainsi, la première voie 30 du calculateur 20 est en charge de la commande du premier vérin électrique 50 et la deuxième voie 40 du calculateur 20 est en charge de la surveillance du vérin électrique 50.

Similairement, le deuxième module de commande 42 de la deuxième carte 41 de la deuxième voie 40 du calculateur 20 est en charge de la commande du deuxième vérin 60. Le premier module de surveillance 33 de la première carte 31 de la première voie 30 du calculateur 20 est en charge de la surveillance du deuxième vérin 60.

On obtient alors un calculateur 20 comprenant deux voies 30 et 40 identiques mais qui conserve cependant une dissymétrie entre la fonction de commande et la fonction de surveillance pour un même vérin. L'indépendance des fonctions de commande et de surveillance est réalisée par le fait que ces fonctions, pour un même vérin, ne sont pas sur la même voie du calculateur 20. Le calculateur 20 répond alors aux exigences d'indépendance et de dissociation des fonctions permettant de mettre en œuvre deux cartes 31 et 41 identiques dont les coûts de développement, de fabrication et de maintenance sont réduits par rapport à un calculateur comprenant une carte dédiée à la commande et une carte dédiée à la surveillance.

Les éléments identiques ou analogues à ceux précédemment décrits porteront une référence numérique augmentée d'une centaine dans la description qui suit d'un deuxième mode de réalisation.

En référence à la figure 4, la première carte de commande et de surveillance 131 comprend : un circuit logique programmable 84 - aussi appelé FPGA pour Field Programmable Gate Array - connu en soi ; une alimentation 85 reliée au circuit logique programmable 84 ; et des connecteurs 174 à 176 et 178 à 180. Le circuit logique programmable 84 comprend une couche 86 de circuit configurable et une couche de réseau mémoire SRAM (non représentée). La périphérie du circuit logique 84 est pourvue de blocs entrée/sortie 87. Selon l'invention, le circuit logique programmable 84 est configuré pour réaliser un premier réseau logique 88 de commande et un premier réseau logique 89 de surveillance. Cette configuration est effectuée en organisant, à l'aide d'un outil de placement-routage, les blocs logiques de la couche 86. Selon la représentation de la figure 4, le circuit logique programmable 84 est ségrégué en deux parties équivalentes selon une frontière horizontale 90 au travers de laquelle aucune interconnexion n'est réalisée. La partie située au-dessus de la frontière 90 correspond au premier réseau logique 88 de commande et la parte située en dessous de la frontière 90 correspond au deuxième réseau logique 89 de surveillance. Cette séparation ne requiert aucune opération physique et figure dans la reconfiguration du circuit logique programmable 84 mémorisée dans la couche de réseau mémoire. Les blocs entrée/sortie 87 sont alors séparés en un premier ensemble 87.1 de blocs entrée/sortie et un deuxième ensemble 87.2 de blocs entrée/sortie respectivement liés au premier réseau logique 88 de commande et au deuxième réseau logique 89 de surveillance. Les deux réseaux logiques 88 et 89 font intervenir des blocs distincts du circuit logique programmable 84, et cette ségrégation est établie lors de la configuration initiale du circuit logique programmable 84.

Les connecteurs 174 à 176 sont reliés au premier ensemble 87.1 de blocs entrée/sortie tandis que les connecteurs 178 à 180 sont reliés au deuxième ensemble 87.2 de blocs entrée/sortie. Le circuit logique programmable 84 est configuré de manière à ce que le premier réseau logique 88 de commande réalise les opérations correspondant au module de commande 132 du vérin électrique 150 et que le premier réseau logique 89 de surveillance réalise les opérations correspondant au module de surveillance 133 du vérin électrique 160. Le premier ensemble de blocs d'entrées/sorties 87.1 et le deuxième ensemble de blocs d'entrées/sorties 87.2 sont respectivement reliés à des connecteurs 134 et 135.

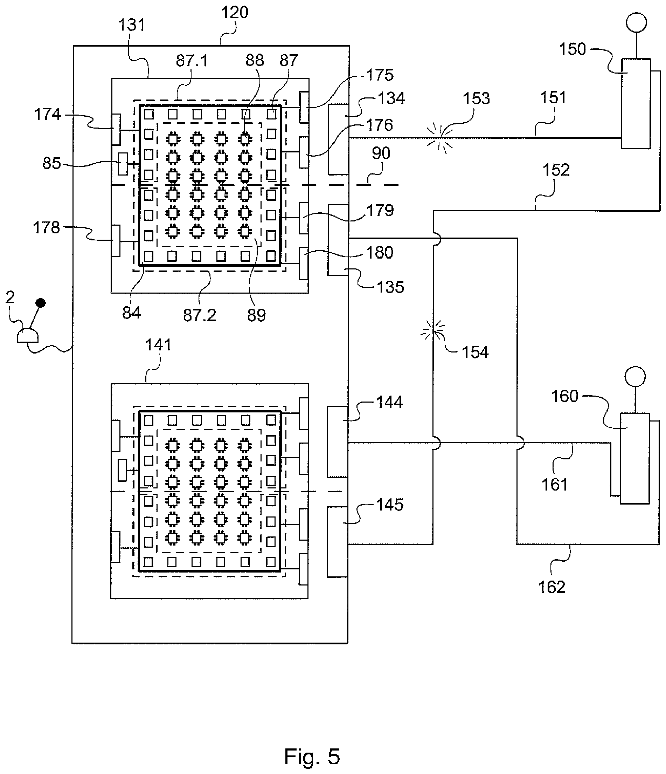

En référence à la figure 5, un calculateur 120 possède deux voies 130 et 140 qui comprennent respectivement la première carte 131 de commande et de surveillance et une deuxième carte 141 de commande et de surveillance identique à la carte 131.

Le calculateur 120 est relié à un premier vérin 150 électrique de réglage du pas de rotor principal 3 par un premier circuit de commande 151 et un premier circuit de surveillance 152. Le calculateur 120 est également relié à un deuxième vérin 160 électrique de réglage du pas de rotor anti-couple 4 par un deuxième circuit de commande 161 et un deuxième circuit de surveillance 162.

La deuxième carte 141 comprend de manière similaire à la carte 131 un circuit logique programmable 94 ségrégué en un deuxième réseau logique 98 de commande et un deuxième réseau logique 99 de surveillance respectivement reliés à un premier ensemble de bloc entrée/sortie 97.1 et à un deuxième ensemble de blocs entrée/sortie 97.2. Les premier et deuxième ensembles de blocs d'entrées sorties 97/1 et 97.2 sont respectivement reliés à des connecteurs 144 et 145.

Chaque carte 131 et 141 comprend également des moyens de connexion à la commande de vol 102.

Le premier réseau logique 88 de commande de la première carte 131 est relié par le connecteur 134 au premier circuit de commande 151. Le deuxième réseau logique de commande 98 est relié par le connecteur 144 au deuxième circuit de commande 161.

Le premier réseau logique de surveillance 89 est relié par un connecteur 135 au deuxième circuit de surveillance 162. Le deuxième réseau logique de surveillance 99 est relié par un connecteur 145 au premier circuit de commande 52.

On obtient alors un calculateur 120 comprenant deux voies 30 et 40 identiques mais qui conserve cependant une dissymétrie entre la fonction de commande et la fonction de surveillance pour un même vérin. L'indépendance des fonctions de commande et de surveillance est réalisée par le fait que ces fonctions, pour un même vérin, ne sont pas sur la même voie du calculateur 120. Le calculateur 120 répond alors aux exigences d'indépendance et de dissociation des fonctions permettant d'obtenir des criticités réduites et met en œuvre deux cartes 131 et 141 sensiblement identiques dont les coûts de développement, de fabrication et de maintenance sont réduits par rapport à un calculateur comprenant deux cartes différentes.

Bien entendu, l'invention n'est pas limitée aux modes de réalisation décrits mais englobe toute variante entrant dans le champ de l'invention telle que définie par les revendications.

En particulier :
- bien qu'ici les actionneurs soient des vérins électrohydrauliques de commande de réglage du pas de rotor, l'invention se rapporte également à d'autres types d'actionneurs comme par exemple un actionneur de sortie d'atterrisseur, d'ouverture de trappe, de commande de gaz, de déplacement d'aileron ou de volet, ou bien des actionneurs hydrauliques ou pneumatiques ;
- bien qu'ici chaque microcontrôleur possède deux connecteurs CAN et un connecteur RJ45, l'invention s'applique également à d'autres types d'unité de contrôle comme par exemple un microprocesseur associé ou non avec de la mémoire vive et/ou morte ou un microcontrôleur pourvu de connecteurs d'autres types ;
- bien qu'ici le calculateur soit relié par un connecteur à trente-cinq broches au circuit de commande ou de surveillance, l'invention s'applique également à d'autres moyens de connexion du calculateur aux circuits de commande ou de surveillance comme par exemple des connecteurs comprenant un nombre différent de broches ou des connecteurs pour liaison série ou parallèle ;
- bien qu'ici les actionneurs soient reliés aux circuits de commande et de surveillance par une liaison filaire, l'invention s'applique également à d'autres moyens de liaison des actionneurs aux circuits de commande et de surveillance comme par exemple une liaison sans fil ou via un bus de terrain unique ;
- bien qu'ici le circuit logique programmable soit de type FPGA, l'invention s'applique également à d'autres types de circuit logique programmable comme par exemple des EPLD (Erasable Programmable Logic Device) pourvus d'une mémoire Flash ou PAL (Programmable Array Logic) mettant en oeuvre des interconnexions fusibles ;
- bien qu'ici l'invention soit décrite en lien avec l'actionnement de deux actionneurs, l'invention s'applique également à l'actionnement de plus de deux actionneurs.

## Revendications

1. Dispositif d'actionnement (10) comprenant au moins un premier et un deuxième actionneur (50, 60) pourvus de moyens de leur liaison respective avec un premier et un deuxième circuit de commande (51, 61) ainsi qu'avec un premier et un deuxième circuit de surveillance (52, 62); et un calculateur à deux voies de calcul indépendantes, comprenant :
- une première et une deuxième carte de commande et de surveillance (31, 41) chacune respectivement pourvue d'un premier et d'un deuxième module de commande (32, 42) ainsi que d'un premier et d'un deuxième module de surveillance (33, 43), les première et deuxième cartes de surveillance et de commande (31, 41) étant identiques ;
- les premier et deuxième module de commande (32, 42) étant respectivement reliés au premier et deuxième circuit de commande (51, 61);
- le premier module de surveillance (33) étant relié au deuxième circuit de surveillance (62);
- le deuxième module de surveillance (43) étant relié au premier circuit de surveillance (52).

2. Dispositif d'actionnement selon la revendication 1, dans lequel le module de commande (32) de chaque carte de commande et de surveillance (31) comprend un premier microcontrôleur (71) et dans lequel le module de surveillance (33) de chaque carte de commande et de surveillance (31) comprend un deuxième microcontrôleur (72) distinct du premier microcontrôleur.

3. Dispositif d'actionnement selon la revendication 1, dans lequel chaque carte de commande et de surveillance (131) comprend un unique circuit logique programmable (84) configuré pour réaliser un premier et un deuxième réseau logique (88, 89) ségrégués correspondant respectivement à un module de commande (132) et à un module de surveillance (133).

## Patentansprüche

1. Betätigungsvorrichtung (10), die mindestens einen ersten und einen zweiten Aktor (50, 60) umfasst, die mit Mitteln für ihre jeweilige Verbindung mit einer ersten und einer zweiten Steuerschaltung (51, 61) sowie mit einer ersten und einer zweiten Überwachungsschaltung (52, 62) versehen sind; und einen Rechner mit zwei unabhängigen Rechenkanälen, umfassend:
- eine erste und eine zweite Steuer- und Überwachungskarte (31, 41), die jeweils mit einem ersten und einem zweiten Steuermodul (32, 42) sowie mit einem ersten und einem zweiten Überwachungsmodul (33, 43) versehen sind, wobei die erste und die zweite Steuer- und Überwachungskarte (31, 41) identisch sind;
- wobei das erste und das zweite Steuermodul (32, 42) mit der ersten bzw. der zweiten Steuerschaltung (51, 61) verbunden sind;
- wobei das erste Überwachungsmodul (33) mit der zweiten Überwachungsschaltung (62) verbunden ist;
- wobei das zweite Überwachungsmodul (43) mit der ersten Überwachungsschaltung (52) verbunden ist.

2. Betätigungsvorrichtung nach Anspruch 1, bei der das Steuermodul (32) jeder Steuer- und Überwachungskarte (31) einen ersten Mikrocontroller (71) umfasst und bei der das Überwachungsmodul (33) jeder Steuer- und Überwachungskarte (31) einen zweiten Mikrocontroller (72) umfasst, der von dem ersten Mikrocontroller verschieden ist.

3. Betätigungsvorrichtung nach Anspruch 1, bei der jede Steuer- und Überwachungskarte (131) eine einzige programmierbare logische Schaltung (84) umfasst, die ausgebildet ist, ein erstes und ein zweites logisches Netzwerk (88, 89) zu realisieren, die segregiert sind und einem Steuermodul (132) bzw. einem Überwachungsmodul (133) entsprechen.

## Claims

1. An actuator device (10) comprising at least first and second actuators (50, 60) provided with means for connecting them respectively to first and second control circuits (51, 61) and to the first and second monitoring circuits (52, 62); and calculation means having two independent calculation channels, comprising:
· a first and second control and monitoring card (31, 41) each respectively provided with a first and a second control module (32, 42) and with a first and a second monitoring module (33, 43), the first and second monitoring and control cards (31, 41) being identical;
· the first and second control modules (32, 42) being connected respectively to the first and second control circuits (51, 61);
· the first monitoring module (33) being connected to the second monitoring circuit (62); and
· the second monitoring module (43) being connected to the first monitoring circuit (52).

2. An actuator device according to claim 1, wherein the control module (32) of each control and monitoring card (31) comprises a first microcontroller (71), and wherein the monitoring module (33) of each control and monitoring card (31) comprises a second microcontroller (72) distinct from the first microcontroller.

3. An actuator device according to claim 1, wherein each control and monitoring card (131) comprises a single programmable logic circuit (84) configured to provide first and second logic arrays (88, 89) that are segregated, corresponding respectively to a control module (132) and to a monitoring module (133).
